# EUROPEAN PATENT APPLICATION

(11) **EP 2 608 446 A1**
(43) Date of publication of application: **26.06.2013**
(21) Application number: 11194372.6
(22) Date of filing: 19.12.2011
(51) Int. Cl.: H04L 9/08, H04L 9/32

(54) **Network device in a smart grid power network and method of encrypting communication between network devices**

(71) Applicant: Siemens Aktiengesellschaft, 80333 München (DE)
(72) Inventor: Boulila, Naoufel, 80809 München (DE)

(57) **Abstract**

The invention provides for a method (20) of encrypting communication between network devices (10) in a smart grid power network, the method (20) comprising the steps of, encrypting (S4), by a first network device (10a), an identification code of the first network device (10a) with a first private key and a second public key, decrypting (S6), by a second network device (10b), the identification code of the first network device (10a) using a second private key matching the second public key and a first public key matching the first private key and validating (S7, S8) the identification code at a validation server (13), negotiating (S9) a symmetric key between the first network device (10a) and the second network device (10b), and encrypting (S10, S11) subsequent communication between the first network device (10a) and the second network device (10b) using the negotiated symmetric key.

## Description

### FIELD OF THE INVENTION

The present invention relates to a network device in a smart grid power network and a method of encrypting communication between network devices in a smart grid power network.

### BACKGROUND OF THE INVENTION

Smart grid power networks comprise a large number of physically distributed network components that may communicate among each other in order to control, measure and dispatch power to consumers.

The communication between network components has to be secured against malicious attacks on the power network, such as spoofing, exploiting, identity theft, data theft, spreading of malware or worms, and remote controlling critical network nodes.

The document US 2010/0306533 A1 discloses methods for securing communication over an energy grid between electric meters and application servers of a power grid by requiring human authorization.

The document US 2011/0271110 A1 discloses a key management system for generating and managing keys used in a communication between network devices in a smart energy grid.

The document Open Metering System Specification, Vol.2 Primary Communication, Issue 3.0.1, January 2011, online available at http://www.oms-group.org/download/OMS-Spec_Vol2_Primary_v301.pdf, discloses in chapter 4.2.5 a method for encrypting communication messages in a smart meter network using Rijndael algorithms.

### SUMMARY OF THE INVENTION

In a first aspect, the invention provides a method of encrypting communication between network devices in a smart grid power network, the method comprising encrypting, by a first network device, an identification code of the first network device with a first private key and a second public key, decrypting, by a second network device, the identification code of the first network device using a second private key matching the second public key and a first public key matching the first private key and validating the identification code at a validation server, negotiating a symmetric key between the first network device and the second network device, and encrypting subsequent communication between the first network device and the second network device using the negotiated symmetric key.

With the method according to the first aspect, it is a lot more complicated to gain possession of the encryption keys used to secure communication between the network devices, since the symmetric key negotiated between the network devices is generated dynamically rather than being static within the network.

Furthermore, with the pre-communication authentication protocol only registered network devices may gain access to the smart grid power network, thus reducing the possibility of spoofing attacks or imposters gaining access to the network.

The symmetric key does not need to be stored permanently on any of the network devices, thereby reducing the possibility of a third person getting knowledge of the symmetric key.

According to one embodiment of the method according to the first aspect the first and/or the second network device are smart meters in the smart grid power network. Especially for smart meters which are usually located in non-surveyed remote sites of the power network it is important to guarantee safety against malicious attacks on the smart grid power network.

According to another embodiment of the method according to the first aspect the negotiated symmetric key has a temporally limited validity. This limits the chance of a third person getting illicit access to the network even further, since the time span during which a symmetric key is valid is too short to reengineer the key.

According to another embodiment of the method according to the first aspect negotiating the symmetric key comprises using a Diffie-Hellman key exchange protocol. This allows the two network devices to define a common secret key over an otherwise insecure communication channel, which key may be used to encrypt subsequent communication securely.

According to another embodiment of the method according to the first aspect the first private key is a hardware serial number unique to the first network device, and wherein the hardware serial number is stored in the first network device. This has the advantage that the identification code may be attached to the first network device in a secure environment such as a manufacturing facility for network device.

According to another embodiment of the method according to the first aspect the validation server is a remote server of the manufacturer of the first network device. The validation server may advantageously also be under the surveillance of the manufacturer, thus increasing the security against a third person illegitimately gaining possession of the identity of the first network device.

In a second aspect, the invention provides for a network device in a smart grid power network, the network device comprising a storage unit configured to store an identification code of the network device and an asymmetric key pair including a public key and a private key, an authentication unit configured to read out the identification code and the private key of the storage unit and to encrypt the identification code using the private key, a communication unit configured to send the encrypted identification code to another network device in the smart grid power network, and an encryption unit configured to negotiate a symmetric key with the other network device and to encrypt communication between the network device and the other network device using the negotiated symmetric key.

According to one embodiment of the network device according to the second aspect the network device is a smart meter in the smart grid power network. Especially for smart meters which are usually located in non-surveyed remote sites of the power network it is important to guarantee safety against malicious attacks on the smart grid power network.

According to another embodiment of the network device according to the second aspect the negotiated symmetric key has a temporally limited validity. This limits the chance of a third person getting illicit access to the network even further, since the time span during which a symmetric key is valid is too short to reengineer the key.

According to another embodiment of the network device according to the second aspect the encryption unit is configured to negotiate a symmetric key with the other network device using a Diffie-Hellman key exchange protocol. This allows the two network devices to define a common secret key over an otherwise insecure communication channel, which key may be used to encrypt subsequent communication securely.

According to another embodiment of the network device according to the second aspect the identification code is a hardware serial number unique to the network device. This has the advantage that the identification code may be attached to the first network device in a secure environment such as a manufacturing facility for network device.

According to another embodiment of the network device according to the second aspect the hardware serial number is stored in a validation server or a remote server of the manufacturer of the network device. The validation server may advantageously also be under the surveillance of the manufacturer, thus increasing the security against a third person illegitimately gaining possession of the identity of the first network device.

In yet another aspect, the invention provides for a smart grid power network comprising a plurality of network devices according to the second aspect of the invention.

### BRIEF DESCRIPTION OF THE DRAWINGS

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily drawn to scale relative to each other. Like reference numerals designate corresponding similar parts.
- Fig. 1: schematically illustrates an embodiment of a smart grid power network comprising a plurality of network devices.
- Fig. 2: schematically illustrates an embodiment of a method of encrypting communication between network devices in a smart grid power network.
- Fig. 3: schematically illustrates an embodiment of a method step of a method of encrypting communication between network devices in a smart grid power network.
- Fig. 4: schematically illustrates an embodiment of another method step of a method of encrypting communication between network devices in a smart grid power network.
- Fig. 5: schematically illustrates an embodiment of a further method step of a method of encrypting communication between network devices in a smart grid power network.
- Fig. 6: schematically illustrates an embodiment of yet a further method step of a method of encrypting communication between network devices in a smart grid power network.

### DETAILED DESCRIPTION OF THE EMBODIMENTS

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Network devices as used herein refer to components or nodes of a network that are part of a network and may actively take part in network related communication, in particular the exchange of communication messages in a smart grid power network. Network devices may for example comprise smart meters, electrical appliances, application servers of power plants, energy trading sites, energy distributors and so on, validation servers of manufacturers of network devices, and similar components. The smart grid power network may provide communication lines, for example wire-bound communication over PowerLAN or telephone landlines, wireless communication over WANs, BANs or HANs, radio communication or similar communication technologies. The network itself may be a virtual part of a physical network, such as the Internet or similar physical network structures.

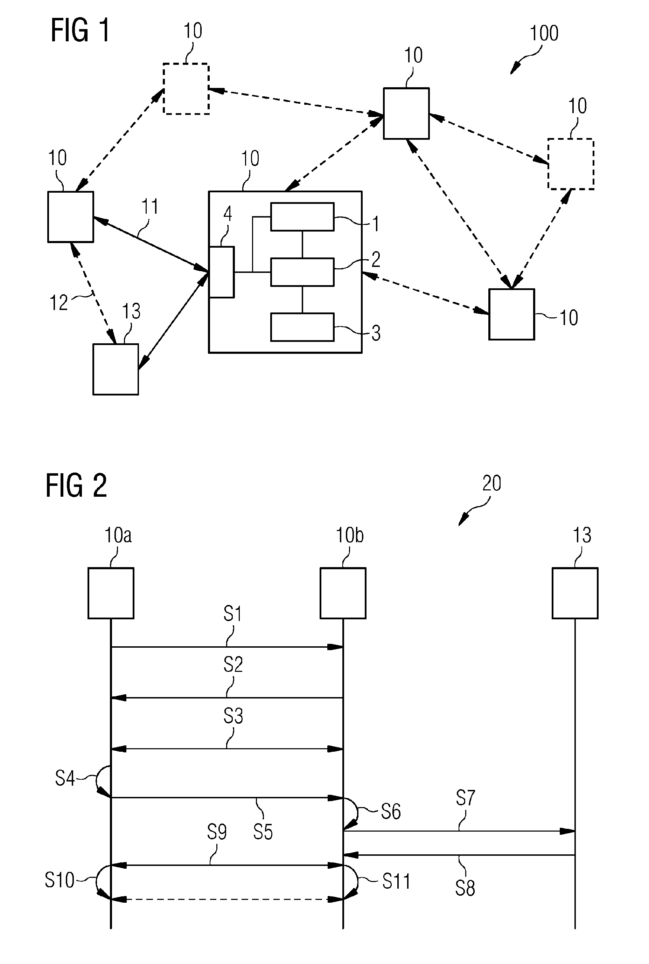

FIG. 1 schematically illustrates a smart grid power network 100 comprising a plurality of network devices 10. The smart grid power network 100 may also comprise one or more validation servers 13, which may be remote servers of a facility or manufacturer of network devices. The network devices 10 may be interconnected by communication connections 11, 12. Two network devices 10 may for example be connected by a communication connection 11. A network device 10 may for example be connected to a validation server 13 by a communication connection 12. The number of network devices 10 and validation servers 13 in the smart grid power network 100 in FIG. 1 is only exemplary, and there may in fact be any number of network devices 10 and validation servers 13 in the smart grid power network 100. Similarly, the number of communication connections 11, 12 is only exemplarily shown in FIG. 1 and there may be any number of communication connections 11, 12 between any network devices 10 and validation servers 13. In particular, the communication connections 11, 12 may be set up or torn down dynamically, especially in the scenario of a virtual communication network 100 as part of a larger physical network, for example a power line communication (PLC) network as virtual part of a power line network.

One network device 10 in FIG. 1 is shown in greater detail, and it is to be understood that other network devices 10 of the smart grid power network 100 may comprise similar or identical components as the particular network device 10 shown in greater detail.

The network device 10 may comprise an encryption unit 1, an authentication unit 2, a storage unit 3 and a communication unit 4. The encryption unit 1 may be coupled to the communication unit 4 and the authentication unit 2. The authentication unit 2 may be coupled to the communication unit 4 and the storage unit 3.

The storage unit 3 may for example be a random access memory (RAM), a read-only access memory (ROM), a flash card, a smart card, a USB memory device or any other similar device configured to retrievably store data on a permanent or temporary basis. The storage unit 3 may be configured to store an identification code of the network device 10. The identification code may for example be a Media Access Control (MAC) number, a hardware serial number or any other alphanumerical code sequence that is used to uniquely identify the network device 10. The storage unit 3 may further be configured to store an asymmetric key pair including a public key and a private key. The identification code and the asymmetric key pair may for example be stored in the storage unit 3 at a manufacturing facility of the network device 10. The identification code and the asymmetric key pair may be stored in the storage unit 3 in a manner secured against illicit or inappropriate accesses, for example such that the identification code and the asymmetric key pair are deleted upon manipulation or tampering of the storage unit 3. For that purpose, the storage unit 3 may for example be equipped with a tampering mechanism, for example a tamper wire mesh or similar tampering detection means.

The authentication unit 2 may be configured to read out the identification code and the private key of the storage unit 3. The authentication unit 2 may be configured to encrypt the identification code using the private key. The authentication unit 2 may be configured to relay the encrypted identification code to other network devices in the smart grid power network 100, for example by means of the communication unit 4 which may be configured to send the encrypted identification code to another network device. Additionally, the communication unit 4 may be configured to send the public key to other network devices, for example as a broadcast ("push") service or on request by other network devices ("pull" service).

The encryption unit 1 may be configured to negotiate a symmetric key with other network devices. The encryption unit 1 may be configured to encrypt communication between the network device 10 and other network devices using the negotiated symmetric key. The encryption unit 1 may for example employ a Diffie-Hellman key exchange protocol for negotiating a symmetric key with other network devices. Alternatively, other key exchange protocols may be used in the encryption unit 1 as well.

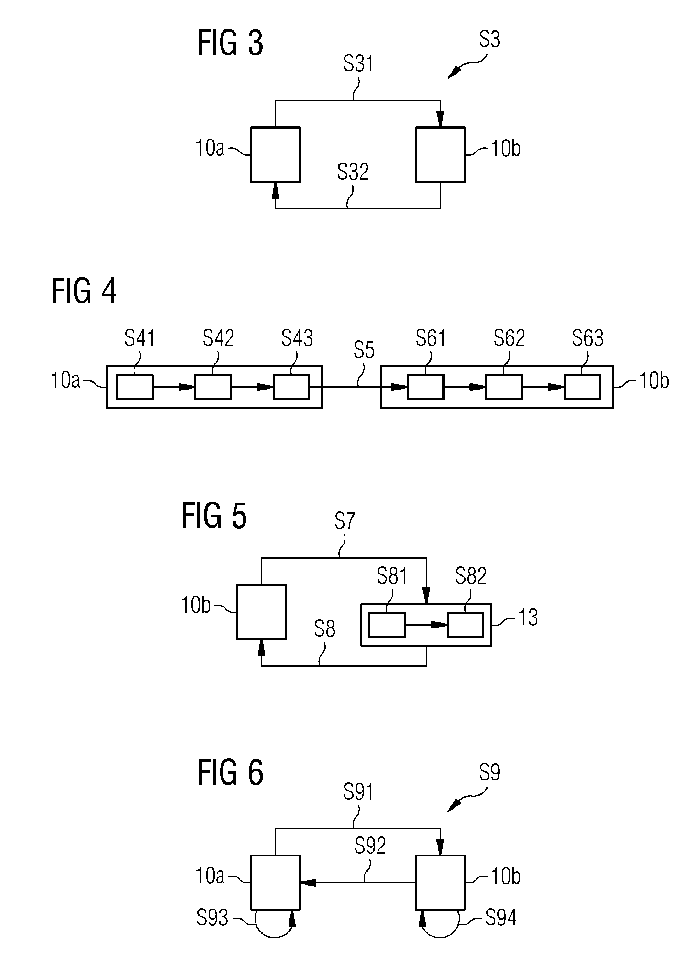

FIG. 2 schematically illustrates a method 200 of encrypting communication between network devices in a smart grid power network. The method 200 may for example be performed by network devices 10 in a smart grid power network, such as the smart grid power network 100 as depicted in FIG. 1. The method 200 of FIG. 2 will be explained in conjunction with FIGS. 3 to 6 which schematically illustrate method steps of a method of encrypting communication between network devices in a smart grid power network, in particular of a method 200 as exemplarily illustrated in FIG. 2.

In a first step S1, a first network device 10a may direct a communication request to a second network device 10b. The second network device 10b may respond by sending an authentication request to the first network device 10a in a second step S2. In a third step S3, the network devices 10a and 10b may exchange their public keys of the respective asymmetric key pairs associated with the respective network device 10a or 10b. In FIG. 3, the method step S3 is shown in more detail. The first network device 10a may send in a step S31 a first public key over an insecure communication channel to the second network device 10b. Simultaneously or subsequently, the second network device 10b may send a second public key in a step S32 over the same or another insecure communication channel to the first network device 10a.

Returning to FIG. 2, in a step S4, the first network device 10a may encrypt an identification code stored in its storage unit 3 and send the encrypted identification code in a step S5 to the second network device 10b, which in turn decrypts the encrypted identification code in a step S6. A possible implementation for the steps S4, S5 and S6 is exemplarily shown in greater detail in FIG. 4. The first network device 10a retrieves the identification code from the storage unit 3 in a step S41. The retrieved identification code may then be encrypted by an authentication unit 2 of the first network device 10a. The authentication unit 2 may in a step S42 first encrypt the identification code with its own first private key, which may be retrieved from the storage unit 3 as well. In a step S43, the authentication unit 2 may encrypt the already encrypted identification code again with the second public key as received in step S32. The encrypted identification code may then be sent by a communication unit 4 of the first network device 10a in a step S5 to the second network device 10b. In the second network device 10b, the encrypted identification code is first decrypted using the second private key of the second network device 10b in a step S61. Then, the second network device 10b decrypts the already decrypted identification code again with the first public key as received in step S31. In a step S63, the second network device 10b may check the decrypted identification code for validity.

In order to check the validity of the identification code of the first network device 10a, the second network device 10b may either look up the identification code in its own registration lists. Alternatively, the second network device 10b may send a validation request in a step S7 to a validation server 13, for example a remote server of a manufacturer of the first network device 10a. The validation server 13 may keep a list of all identification codes of network devices manufactured by the manufacturer.

FIG. 5 shows an exemplary embodiment of the validation process of a first network device 10a at a validation server 13. The validation server 13 may receive a validation request in a step S7 by a second network device 10b and may in a step S81 check the received identification code with a registration list. In a step S82, a decision is made whether the identification code matches one of the items in the registration list or not. In a step S8, the validation server 13 may return a response to the second network device 10b which confirms or denies the authenticity of the first network device 10a.

Upon reception of the response of the validation server 13, the second network device 10b may selectively reject communication with the first network device 10a or establish a communication channel with the first network device 10a. Returning to FIG. 2, in case a communication channel with the first network device 10a is established, the network devices 10a and 10b may in a step S9 negotiate a symmetric key that may be used to encrypting subsequent communication between the first network device 10a and the second network device 10b using the negotiated symmetric key. A possible implementation, for example a Diffie-Hellman key exchange protocol, for negotiating a symmetric key is exemplarily shown in FIG. 9.

In a step S91, the first network device 10a may send a prime number p and a primitive root g modulo p over the established communication channel to the second network device 10b. Additionally, the first network device 10a may choose a random number a and compute a first key generator u = g^{a} mod p which may be sent to the second network device 10b. The second network device 10b may choose a random number b and compute a second key generator v = g^{b} mod p which may be sent back to the first network device 10a in a step S92. Each of the network devices 10a and 10b may then use the received key generator v and u, respectively, in order to generate a symmetric key k using its own chosen random number a and b, respectively. For example, in a step S93 the first network device 10a may calculate the symmetric key k as k = v^{a} = g^{ba} mod p. In a step S94 the second network device 10b may calculate the symmetric key k as k = u^{b} = g^{ab} mod p. Both network devices 10a and 10b are now in possession of the same symmetric key k which may be used to encrypt subsequent communication over the established communication channel.

The symmetric key k may only be valid for a certain predefined time span. For example, the symmetric key k may only be valid for the duration of a communication session between the network devices 10a and 10b. After the session expires, the network devices 10a and 10b will have to negotiate a new symmetric key k' again. It may also be possible that the symmetric key k may only be valid for a predefined number of sessions between the network devices 10a and 10b, or for a certain fixed duration, for example a few seconds or a few minutes. All these implementations have the advantage, that the symmetric key used for communication between the network devices 10a and 10b is generated on the fly and does not need to be stored permanently on any of the network devices 10a or 10b. That way, it is not possible for a third person to gain unauthorized access to the network by reading out the communication key from one of the network devices.

With the method 20, each communication channel between a distinct pair of two network devices 10 will have its own symmetric communication key. That way, whenever one of the symmetric keys is compromised, the rest of the network will be able to still communicate securely. Moreover, none of the symmetric communication keys will be known a priori, thereby enhancing the security of the communication within the smart grid power network.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

## Claims

1. A method (20) of encrypting communication between network devices (10) in a smart grid power network (100), the method (20) comprising:
by a first network device (10a), encrypting (S4) an identification code of the first network device (10a) with a first private key and a second public key;
by a second network device (10b), decrypting (S6) the identification code of the first network device (10a) using a second private key matching the second public key and a first public key matching the first private key and validating (S7, S8) the identification code at a validation server (13); negotiating (S9) a symmetric key between the first network device (10a) and the second network device (10b); and encrypting (S10, S11) subsequent communication between the first network device (10a) and the second network device (10b) using the negotiated symmetric key.

2. The method (20) according to claim 1, wherein the first and/or the second network device (10) are smart meters in the smart grid power network (100).

3. The method (20) according to one of the claims 1 and 2, wherein the negotiated symmetric key has a temporally limited validity.

4. The method (20) according to one of the claims 1 to 3, wherein negotiating the symmetric key comprises using a Diffie-Hellman key exchange protocol.

5. The method (20) according to one of the claims 1 to 4, wherein the first private key is a hardware serial number unique to the first network device (10a), and wherein the hardware serial number is stored in the first network device (10a) .

6. The method (20) according to claim 5, wherein the validation server (13) is a remote server of the manufacturer of the first network device (10a).

7. A network device (10) in a smart grid power network (100), the network device (10) comprising:
a storage unit (3) configured to store an identification code of the network device (10) and an asymmetric key pair including a public key and a private key;
an authentication unit (2) configured to read out the identification code and the private key of the storage unit (3) and to encrypt the identification code using the private key;
a communication unit (4) configured to send the encrypted identification code to another network device in the smart grid power network (100); and
an encryption unit (1) configured to negotiate a symmetric key with the other network device and to encrypt communication between the network device (10) and the other network device using the negotiated symmetric key.

8. The network device (10) according to claim 7, wherein the network device (10) is a smart meter in the smart grid power network (100).

9. The network device (10) according to one of the claims 7 and 8, wherein the negotiated symmetric key has a temporally limited validity.

10. The network device (10) according to one of the claims 7 to 9, wherein the encryption unit (1) is configured to negotiate a symmetric key with the other network device using a Diffie-Hellman key exchange protocol.

11. The network device (10) according to one of the claims 7 to 10, wherein the identification code is a hardware serial number unique to the network device (10).

12. The network device (10) according to claim 11, wherein the hardware serial number is stored in a validation server (13) of the manufacturer of the network device (10).

13. A smart grid power network (100), comprising a plurality of network devices (10) according to one of the claims 7 to 12.
